Europäisches Patentamt

European Patent Office

Office européen des brevets

(19)

(11) Veröffentlichungsnummer: **0 004 691**
**A2**

(12) # EUROPÄISCHE PATENTANMELDUNG

(21) Anmeldenummer: 79200156.2

(22) Anmeldetag: 02.04.79

(51) Int. Cl.²: **A 23 K 1/16**
**A 23 K 1/175**

(30) Priorität: 05.04.78 DE 2814573

(43) Veröffentlichungstag der Anmeldung:
17.10.79 Patentblatt 79/21

(84) Benannte Vertragsstaaten:
BE CH DE FR LU NL SE

(71) Anmelder: **RUHR-STICKSTOFF AKTIENGESELLSCHAFT**
**Königsallee 21**
**D-4630 Bochum(DE)**

(72) Erfinder: **Koch, Friedhelm, Dr.**
**Dernekämper Esch 2**
**D-4408 Dülmen(DE)**

(72) Erfinder: **Ploenes, Franz, Ing.agr.**
**Wefersweg 4**
**D-4155 Grefrath 2(DE)**

(74) Vertreter: **Stell, Hanna, Dipl.-Chem. et al,**
**Herzogstrasse 28 Postfach 2840**
**D-4690 Herne 2(DE)**

(54) **Mineralische Zusatzstoffe für die Tierernährung.**

(57) Es werden mineralische Zusatzstoffe, nämlich Phosphate, Carbonate, Chloride und/oder Oxyde von Calcium, Magnesium, Natrium und/oder $NH_4^+$ zusammen mit geringen Mengen an Fumarsäure bzw. Fumarsäuresalzen, nämlich 0,5 - 10 Gew.%, bezogen auf den Mineralstoff, für die Tierernährung eingesetzt. Dabei werden die Wirkungsgrade von Calcium, Magnesium, Natrium und Phosphor wesentlich erhöht.

EP 0 004 691 A2

0004691

VEBA-CHEMIE AKTIENGESELLSCHAFT
Gelsenkirchen-Buer

---

### Mineralische Zusatzstoffe für die Tierernährung

---

Beschreibung und Beispiele:

---

Die Erfindung betrifft mineralische Zusatzstoffe für die Tierernährung, enthaltend einen geringen Zusatz an Fumarsäure/ Fumarsäuresalz.

Es ist bekannt, Fumarsäure oder Fumarsäuresalze als Zusatz zum Tierfutter zu verwenden. Durch den angenehm sauren Geschmack wird die Futteraufnahme erhöht und außerdem wird durch den Zusatz der Säure die Fällung von Proteinen im Verdauungstrakt verbessert. Die Fumarsäure wirkt also insbesondere wachstumsfördernd, sie stellt aber auch ein Konservierungsmittel dar. Bei Zusatz von z.B. Eisenfumaraten kann außerdem auch noch Eisenmangel bei Tieren behoben werden. Die Zugabe an Fumarsäure erfolgt in Mengen von beginnend 0,5 % bis 4 % bezogen auf die fertige Futtermischung (100 %).

Es ist weiterhin auch bekannt der Tiernahrung Ca, P, Na bzw. $NH_4^+$ und Mg in Form verschiedener Verbindungen zuzusetzen. Diese werden insbesondere als mineralische Salze der Nahrung zugegeben, da die natürlichen Gehalte der Futtermittel in der Regel nicht ausreichen, um den Bedarf der Tiere zu decken. Eine Übersicht über die hauptsächlich verwendeten mineralischen Verbindungen wird in der folgenden Tabelle gegeben:

- 2 -

0004691

Tab. 1: Mineralische Zusatzstoffe zur Tiernahrung

| Ca | P | Na | Mg |
|---|---|---|---|
| $Ca CO_3$ | Knochenphosphate | Na Cl | Mg O |
| Ca-Phosphate | Natriumphosphate | Natriumphosphate | $Mg CO_3$ |
| $Ca Cl_2$ | Ammoniumphosphate | Na-Carbonate | $Mg HPO_4$ |
| | Calciumphosphate | $Na_2 SO_4$ | |

Neben den reinen Salzformen werden bei Phosphaten auch Mischsalze wie Ca- Na- Phosphate und Ca- Na- Mg-Phosphate eingesetzt.

Die Auswahl der Verbindungen richtet sich nach verschiedenen
Kriterien, wobei die Preiswürdigkeit und die Verwertbarkeit
der Verbindungen an erster Stelle stehen. Die Verwertbarkeit
der Mineralstoffe wird durch verschiedene Faktoren beeinflußt,
an erster Stelle sind die tierartlichen Anforderungen zu nennen.
So stellen Wiederkäuer an die Mg- und Na-Versorgung, das Schwein
an die Ca u. P-Zufuhr und das Geflügel an die Ca-Zufuhr besondere
Anforderungen. Die Mineralstoffe müssen dem Tier in der Höhe des
Bedarfs und in einem bestimmten Verhältnis zueinander zugeführt
werden. Jede Überdosierung einer Verbindung beeinflußt auch die
Verwertung anderer Mineralstoffe, so wird durch P-Überschuß auch
die Ca-Verwertung beeinflußt, hohe Mg-Gaben senken die Ca- und
P-Resorption.

Einen großen Einfluß auf die Verwertung der mineralischen Stoffe
haben auch die spezifischen Eigenschaften der Verbindungen. So
ist es bekannt, daß Tiere Phosphor und Calcium aus Fluorapatit
nicht verwerten können, Hydroxylapatit in Knochenmehl ist dagegen aufschließbar.

0004691

Unter Verwertung einer mineralischen Verbindung wird der Übergang des betreffenden Stoffes aus der Futterration in das Endprodukt eines Stoffwechselvorganges bzw. der Übergang von der Nahrung in die tierischen Produkte verstanden. So ergibt sich, daß die Verwertbarkeit von mineralischen Verbindungen nur im Tierversuch gemessen werden kann. Die Erfassung der Mineralstoffverwertbarkeit kann sich noch nicht auf ein anerkanntes Verfahren stützen, es werden vielmehr sehr unterschiedliche Verfahren angewandt, bei denen allgemeine Wachstumsrate, Futterverwertung, Blutzusammensetzung, Knochenaschegehalt u.a. Faktoren erfaßt werden. Ein Verfahren, mit dem sehr gute Ergebnisse erzielt werden konnten, ist der Göttinger Transponierungstest. Bei diesem Verfahren wird eine Beziehung zwischen allgemeinem Wachstum und Kalzifizierung besonderer Knochen und der Mineralstoffaufnahme gebildet.

Mit Hilfe dieses Testes gelang es, die üblichen Futtermineralien nach ihrer Verwertbarkeit in eine Klassifizierung einzuordnen. Unter definierten Bedingungen kann jeder mineralischen Verbindung eine besondere Wertigkeit zugeordnet werden; die üblichen Mineralstoffe wurden mit Wirkungsgraden von 25 - 130 bewertet.

In der folgenden Tabelle ist diese Rangordnung für einige Futterphosphate aufgeführt.

Tabelle 2: Wirkungsgrade von Futterphosphaten

| | Ca-WG | P-WG |
|---|---|---|
| Dicalciumphosphat (DCP) 40 % $P_2O_5$ | 103 | 105 |
| Dicalciumphosphat 46 % $P_2O_5$ | 103 | 101 |
| Dicalciumphosphat 50 % $P_2O_5$ | 110 | 108 |
| Curaphos | 62 | 60 |
| Ca-Na-Phosphat | 105 | 102 |
| Ca-Na-Mg-Phosphat I | 119 | 117 |
| Ca-Na-Mg-Phosphat II | 121 | 119 |

|  | Ca-WG | P-WG |
|---|---|---|
| Monocalciumphosphat | 117 | 115 |
| Rohphosphat | 87 | 84 |

P-WG 0004691

Es wurde nun überraschenderweise gefunden, daß sich durch den Zusatz von Fumarsäure in sehr geringen Mengen, d.h. 0,5 bis 10 Gew.-%, bezogen auf die mineralische Verbindung, nicht auf das Gesamtfutter, die Wirkungsgrade von Ca, P, Na und Mg wesentlich anheben lassen. Dies entspricht Fumarsäurezusätzen von 0,0025 bis 0,4 Gew.-%, bezogen auf die gesamte Futtermischung, der Zusatz liegt damit wesentlich unter den bekannten Normen.

Gegenstand der Erfindung sind daher mineralische Zusatzstoffe für die Tierernährung, enthaltend Phosphate und/oder Carbonate und/oder Chloride und/oder Oxyde von Ca und/oder Mg und/oder Na bzw. $NH_4^+$ und Fumarsäure/Fumarsäuresalze in Mengen von 0,5 bis 10 Gew.-%, bezogen auf Mineralstoff.

Durch den Zusatz von Fumarsäure in geringen Mengen ließen sich die angegebenen Wertigkeiten wesentlich anheben, während höhere Zugabe die Wirkungsgrade verschlechteten, wie aus der folgenden Tabelle hervorgeht:

Tabelle 3: Wirkungsgrade von DCP mit Fumarsäurezusatz (FS)

|  | Ca-WG | P-WG |
|---|---|---|
| DCP 46 | 102 | 100 |
| DCP-46 + 3 % FS | 114 | 112 |
| + 6 % FS | 120 | 118 |
| 9 % | 120 | 117 |
| 12 % | 116 | 114 |
| DCP-40 | 108 | 105 |
| DCP-40 + % Na-Fumarat | 120 | 118 |

Eine Umsetzung der Mischung in heißem Wasser mit anschließender Trocknung brachte keine weitere Verbesserung, so daß geschlossen werden kann, daß der Effekt ein spezifischer Fumarsäureeffekt ist und nicht auf der besseren Verwertung des Ca in Form von Fumarat beruhen. Zum anderen dürfte eine besser verwertbare Ca-Form nicht derartige Effekte auf die Verwertbarkeit des Phosphors haben. Dieser Effekt war insofern auch überraschend, als bisher wohl bekannt war, daß zwischen den Mineralstoffen und ihren Anionenbindungsformen enge Beziehungen bestanden; nicht bekannt war, daß die Verwertung durch die Zugabe einer kristallinen Säure/Salzes beeinflußt werden kann.

Der Wert der Erfindung ist bedeutend, da es hiermit möglich wird, den Tieren höhere Nettomengen an Mineralstoffen im Körper verfügbar zu machen. Werden Tieren Mineralstoffe in größeren Mengen zugeführt als dem Bedarf entsprechen, so sinkt in der Regel die Ausnutzung der Minerale ab, ohne daß wesentlich größere Mengen verwertet werden. Das hat zur Folge, daß schlecht ausnutzbare Mineralstoffe auch mit hohem Sicherheitszuschlag nicht in der Lage sind, den Bedarf der Tiere zu decken. Mit gut verwertbaren Mineralstoffen ist dies dagegen möglich, wie in der folgenden Tabelle dargestellt ist.

Tabelle 4:   Auswirkungen unterschiedlicher Gesamtwirkungsgrade eines Mineralstoffes auf seine Verwertung durch das Tier am Beispiel des Rindes

| Ges.-WG | rel. Verwertung % | Verwertbare Menge bei 100 % Bedarfsdeckung | | |
|---|---|---|---|---|
| | | Ca (g) | P (g) | Mg (g) |
| 111 - 130 | 90 - 100 | 12 | 6 | 1 |
| 91 - 110 | 80 - 90 | 10 | 5 | 0,9 |
| 71 - 90 | 70 - 80 | 8 | 4 | 0,7 |
| unter 70 | 50 - 70 | 6 | 3 | 0,5 |

Bei schlecht verwertbaren Mineralfutterkomponenten kann demnach der Bedarf nur zur Hälfte gedeckt werden. Durch die Anhebung der Verwertbarkeit um 10 - 20 Gesamtwirkungsgrade kann dem Tier eine um 10 - 20 % höhere verwertbare Mineralstoffmenge zugeführt werden, ohne daß der Gehalt im Futter angehoben wird. Wie Tabelle 3 zeigt, ist es durch Zusatzmengen von 3 - 6 % Fumarsäure bereits möglich, die Phosphorverwertung um 12 - 18 Einheiten der Wirkungsgradskala anzuheben. Mengen von mehr als 10 % hatten keinen zusätzlichen Effekt.

st/lö.

Gelsenkirchen-Scholven, den 31. März 1978

0004691

VEBA-CHEMIE AKTIENGESELLSCHAFT
Gelsenkirchen-Buer

---

Mineralische Zusatzstoffe für die Tierernährung

---

Patentansprüche:

1. Mineralische Zusatzstoffe für die Tierernährung, enthaltend Phosphate und/oder Carbonate und/oder Chloride und/oder Oxyde von Ca und/oder Mg und/oder Na bzw. $NH_4^+$ und Fumarsäure/Fumarsäuresalze in Mengen von 0,5 bis 10 Gew.%, bezogen auf Mineralstoff.

2. Mineralische Zusatzstoffe für die Tierernährung nach Anspruch 1, bestehend aus Calciumphosphaten und Fumarsäure/Fumarsäuresalz in Mengen von 0,5 bis 10 Gew.% bezogen auf das Calciumphosphat.